# EUROPÄISCHE PATENTANMELDUNG

(11) **EP 3 168 123 A1**
(43) Veröffentlichungstag der Anmeldung: **17.05.2017**
(21) Anmeldenummer: 16191294.4
(22) Anmeldetag: 29.09.2016
(51) Int. Cl.: B62M 6/45, B62M 6/50

(54) **NOTABSCHALTANORDNUNG UND FAHRZEUG**

(30) Priorität: 10.11.2015 DE 102015222054
(71) Anmelder: ROBERT BOSCH GMBH, 70442 Stuttgart (DE)
(72) Erfinder: Stracke, Rolf, 75305 Neuenbuerg (DE); Mueller, Juergen, 71726 Benningen (DE)

(57) **Zusammenfassung**

Die vorliegende Erfindung betrifft ein Notabschaltanordnung (20) für einen Antrieb (80) eines mit Motorkraft und insbesondere eines zusätzlich mit Muskelkraft antreibbaren Fahrzeuges (1), eines Elektrofahrrades, E-Bikes, Pedelecs oder dergleichen, mit einer Sensoreinheit (30) und einer Auswerteeinheit (40), bei welcher die Sensoreinheit (30) ausgebildet ist, mindestens eine Größe zu überwachen, die für einen Zustand eines zumindest teilweisen und/oder drohenden Kontrollverlustes eines Fahrers (55) über das Fahrzeug (1) charakteristisch ist, und die Auswerteeinheit (40) ausgebildet ist, (i) aus dem Wert der Größe zu bestimmen, ob ein Abschaltzustand vorliegt, und (ii) beim Vorliegen eines Abschaltzustandes zu bewirken, dass der Antrieb (80) des Fahrzeuges (1) einen inaktiven Zustand einnimmt oder beibehält.

## Beschreibung

### Stand der Technik

Die vorliegende Erfindung betrifft eine Notabschaltanordnung und ein Fahrzeug. Die vorliegende Erfindung betrifft insbesondere eine Notabschaltanordnung für einen Antrieb eines mit Motorkraft und insbesondere zusätzlich mit Muskelkraft antreibbaren Fahrzeuges, eines Elektrofahrrades, eines E-Bikes, Pedelecs oder dergleichen. Ferner betrifft die vorliegende Erfindung insbesondere ein Fahrzeug, welches mit Motorkraft und insbesondere zusätzlich mit Muskelkraft antreibbar ist, ein Elektrofahrrad, ein E-Bike, ein Pedelec oder dergleichen.

Bei mit Motorkraft und insbesondere bei zusätzlich mit Muskelkraft antreibbaren Fahrzeugen, z. B. bei Elektrofahrrädern oder dergleichen, kann es auf Grund des drehmomentenstarken Antriebes in bestimmten Benutzungsfällen zu kritischen Situationen kommen. Dies ist insbesondere dann der Fall, wenn der Fahrer das Fahrzeug nicht mehr beherrscht und der Antrieb dennoch für einen Vortrieb sorgt. Zusätzliche kritische Situationen können durch Fehlfunktion des Antriebes oder anderer Komponenten des Fahrzeuges zu einem Unfall führen. Zwar sind die meisten Antriebe mit einem Betätigungsmechanismus versehen, so dass beim Loslassen des Mechanismus die Drehmomenterzeugung oder die Drehmomentübertragung und somit der Vortrieb des Antriebes erlischt. Dies ist jedoch nicht ausreichend, da gerade bei ungeübten Fahrern das Erlöschen des Vortriebes unter Umständen zu spät erfolgt und damit das Fahrzeug erst in eine kritische Situation gerät, in der der Fahrer das Fahrzeug nicht mehr beherrscht.

### Offenbarung der Erfindung

Die erfindungsgemäße Notabschaltanordnung mit den Merkmalen des Anspruches 1 weist demgegenüber den Vorteil auf, dass der Zustand des Fahrzeuges und/oder des Fahrers des Fahrzeuges automatisch überwacht wird, um ggf. und ohne zutun des Fahrers bereits im Entstehen einer Gefahrensituation einen Abschaltzustand zu detektieren und den Antrieb in einen inaktiven Zustand zu überführen. Dies wird erfindungsgemäß mit den Merkmalen des unabhängigen Anspruches 1 dadurch erreicht, dass eine Notabschaltanordnung für einen Antrieb eines mit Motorkraft und insbesondere zusätzlich mit Muskelkraft antreibbaren Fahrzeuges, Elektrofahrrades, E-Bikes, Pedelecs oder dergleichen, geschaffen wird, welche eine Sensoreinheit und eine Auswerteeinheit aufweist. Die Sensoreinheit ist ausgebildet, (i) mindestens eine Größe zu überwachen, die für einen Zustand eines zumindest teilweisen und/oder drohenden Kontrollverlustes eines Fahrers über das Fahrzeug charakteristisch ist, und (ii) mindestens einen Wert der mindestens einen Größe bereitzustellen. Die Auswerteeinheit ist ausgebildet, (iii) aus dem mindestens einen Wert der mindestens einen Größe zu bestimmen, ob ein Abschaltzustand vorliegt, und (iv) beim Vorliegen eines Abschaltzustandes zu bewirken oder zu veranlassen, dass der Antrieb des Fahrzeuges einen inaktiven Zustand einnimmt oder beibehält. Erfindungsgemäß wird also alternativ oder zusätzlich zur subjektiven Wahrnehmung der Fahrsituation durch den Fahrer über die Sensoreinheit der Zustand des Fahrzeuges hinsichtlich des Vorliegens oder des sich Anbahnens eines zumindest teilweisen Kontrollverlustes des Fahrers über das Fahrzeug überwacht und eine für den Zustand charakteristische Größe bestimmt. Aus dem Wert der Größe kann direkt oder alternativ oder zusätzlich über ein entsprechendes für den Wert der Größe repräsentatives Signal durch die Auswerteeinheit eine Bewertung erfolgen, ob ein so genannter Abschaltzustand vorliegt. Ein Abschaltzustand ist dabei ein Zustand, bei welchem der Antrieb des Fahrzeuges in einen inaktiven Zustand versetzt wird oder, sofern er bereits in einem inaktiven Zustand ist, in diesem gehalten wird. Auf diese Art und Weise kann bereits frühzeitig eine Gefahrensituation entschärft werden, weil über die Sensoreinheit auch Zustände des Fahrers des Fahrzeuges detektierbar sind, die der Fahrer selbst nicht oder erst zu spät wahrnimmt.

Das Bereitstellen eines Wertes einer Größe kann direkt erfolgen z.B. durch einen Messprozess oder durch Erzeugen und Abgabe eines für den oder die Werte repräsentativen Signales.

Es können eine oder mehrere Größen überwacht werden, z.B. durch ein oder mehrmaliges Erfassen von Werten der Größen durch einen Messprozess.

Unter einer für einen Zustand charakteristischen Größe wird eine Größe verstanden, deren Werte geeignet sind den in Rede stehenden Zustand teilweise oder vollständig zu beschreiben.

Unter einem Bewirken einer Inaktivierung oder dergleichen kann auch die Möglichkeit verstanden werden, entsprechende technische Maßnahmen zu veranlassen.

Die Unteransprüche zeigen bevorzugte Weiterbildungen der Erfindung.

Zur zuverlässigen Charakterisierung des Fahrerzustandes ist eine Weiterbildung der erfindungsgemäßen Notabschaltanordnung ausgebildet, (i) eine zeitweise oder andauernde und/oder teilweise oder vollständige An- und Abwesenheit des Fahrers am Fahrzeug zu überwachen und (ii) das Bestimmen des Vorliegens eines Abschaltzustandes insbesondere auf der Grundlage des Überwachens durchzuführen.

Bei einer vorteilhaften Ausgestaltungsform der erfindungsgemäßen Notabschaltanordnung ist der inaktive Zustand des Antriebes des Fahrzeuges ein Zustand, bei welchem eine Kopplung des Antriebes mit Drehmomentübertragung an ein Antriebsrad des Fahrzeuges unterbrochen, unterdrückt oder vermindert ist. Die Drehmomenterzeugung oder die Drehmomentübertragung kann am einfachsten durch Abschalten eines dem Antrieb des Fahrzeuges zu Grunde liegenden Motors erfolgen, z.B. durch ein Unterbrechen der Energieversorgung. Alternativ dazu kann jedoch ausschließlich eine Momententkopplung des Motors des Antriebes vom Abtriebsstrang erfolgen, so dass der Motor als solcher in Betrieb gehalten wird, die Drehmomentübertragung an das Antriebsrad als Abtriebselement jedoch unterbrochen ist.

Zum Erfassen der Situation und insbesondere des Zustandes des Fahrzeuges und/oder des Fahrers des Fahrzeuges weist die Sensoreinheit in vorteilhafter Weise einen oder mehrere Sensoren auf.

Diese Sensoren können einzeln eine oder mehrere den Zustand des Fahrzeuges und/oder des Fahrers des Fahrzeuges beschreibende Größen messen oder überwachen.

Alternativ oder zusätzlich können auch mehrere Sensoren zusammenwirkend verwendet werden, um ein oder mehrere Werte einer oder mehrerer für den Zustand des Fahrzeuges und/oder des Fahrers des Fahrzeuges charakteristischer Größen zu bestimmen.

Es bieten sich vielfältige Möglichkeiten des Sensoreinsatzes an, um den Zustand des Fahrzeuges und/oder des Fahrers des Fahrzeuges zu charakterisieren. So kann es einzeln oder in Kombination vorgesehen sein, dass der eine oder die mehreren Sensoren ausgebildet sind, einen oder mehrere Werte einer oder mehrerer Größen, aus der Gruppe zu bestimmen, die aufweist:
- einen Kontakt des Fahrers des Fahrzeuges zu einem oder beiden von zwei Lenkergriffen des Fahrzeuges,
- einen Kontakt des Fahrers des Fahrzeuges zu einer oder beiden von zwei Pedalen des Fahrzeuges,
- einen Kontakt des Fahrers des Fahrzeuges zu einem Sitz des Fahrzeuges,
- einen Abstand des Fahrers des Fahrzeuges zu einer oder zu mehreren Komponenten und insbesondere zum Lenker des Fahrzeuges und
- eine zeitweise oder andauernde teilweise oder vollständige Abwesenheit oder Trennung des Fahrers vom Fahrzeug.

Dies kann in einer beliebigen Kombination erfolgen. Es können auch zeitliche Änderungen der Größen und ihrer Werte bei der Analyse berücksichtigt werden.

Zusätzlich können noch Aspekte des Fahrzeugzustandes einbezogen werden, z.B.
- eine Position, Lage und/oder Orientierung des Fahrzeuges und/oder deren zeitliche Änderung, insbesondere ein Gieren, Nicken und/oder Wanken,
- eine Fahrgeschwindigkeit des Fahrzeuges,
- eine Fahrbeschleunigung des Fahrzeuges, insbesondere einen Stoß und/oder Aufprall,
- ein Drehmoment des Antriebes,
- eine Drehzahl des Antriebes,
- eine Drehzahl eines oder mehrerer Räder, insbesondere eine Drehzahldifferenz zwischen verschiedenen Rädern und/oder einen Schlupf eines oder mehrerer Räder,
- einen Lenkwinkel des Fahrzeuges,
- einen Einschlagwinkel eines Lenkers des Fahrzeuges,
und deren Kombinationen und zeitlichen Änderungen.

Auch im Hinblick auf das dem jeweiligen Sensor zu Grunde liegende Messprinzip bieten sich verschiedene Möglichkeiten an. So kann ein jeweiliger Sensor ausgewählt sein aus der Gruppe, die aufweist elektrische Sensoren, magnetische Sensoren, Drucksensoren, optische Sensoren, Infrarotsensoren, Funksensoren und dergleichen.

Um den Zustand des Fahrzeuges und/oder des Fahrers des Fahrzeuges bewerten zu können, bieten sich unterschiedliche Auswerteschemata in Bezug auf die von der Sensoreinheit erfassten Werte überwachter Größen an. Besonders vorteilhaft ist der Vergleich mit Schwellwerten, Grenzwerten oder Wertebereichen.

So ist es bei einer besonders bevorzugten erfindungsgemäßen Notabschaltanordnung vorgesehen, dass die Auswerteeinheit ausgebildet ist, das Vorliegen eines Abschaltzustandes festzustellen, wenn ein Wert oder Werte einer oder mehrerer charakteristischer Größen in einem vorgegebenen Abschaltbereich liegen und insbesondere einen vorgegebenen Grenzwert über- oder unterschreiten.

Im Betrieb eines Fahrzeuges kann eine Situation nicht ausgeschlossen werden, bei welcher eine Gefahrensituation nur temporär, also für eine vergleichsweise kurze Zeitspanne, vorliegt, und sich die Situation entschärft und/oder der Fahrer des Fahrzeuges die Kontrolle über das Fahrzeug zurückgewinnt. In einer solchen Situation ist es nicht unbedingt notwendig, den Fahrbetrieb durch Inaktivieren des Antriebes des Fahrzeuges doch noch zu beeinflussen.

Um derartige Situationen einer Überkompensation zu vermeiden, ist es bei einer bevorzugten Ausgestaltungsform der erfindungsgemäßen Notabschaltanordnung vorgesehen, dass die Auswerteeinheit ausgebildet ist, das Vorliegen eines Abschaltzustandes erst dann festzustellen, wenn zu mehreren aufeinanderfolgenden Zeitpunkten ein Wert oder Werte einer oder mehrerer charakteristischer Größen in einem vorgegebenen Abschaltbereich liegen und insbesondere einen vorgegebenen Grenzwert über- oder unterschreiten.

Es ist z. B. denkbar, kurzmaschig Werte einer Messgröße zu erfassen und erst dann einen Abschaltzustand zu detektieren, wenn mehrmals hintereinander ein bestimmtes Abschaltkriterium erfüllt ist, z. B. ein Schwellwert überschritten oder unterschritten wird oder der Wert einer Größe in einem bestimmten Werteintervall liegt.

Denkbar ist auch eine Auswertung, bei welcher ein Abschaltzustand auch dann nicht bestimmt wird, wenn der Wert einer Größe zwar in einem vorgegebenen Abschaltbereich für die Werte der Größe liegt, aus dem zeitlichen Verlauf aufeinanderfolgender Werte der Größe jedoch zu erkennen ist, dass der Wert der Größe den Abschaltbereich demnächst verlassen wird.

Um ein besonders energieeffizientes Vorgehen zu ermöglichen, ist es bei einer anderen Ausgestaltungsform der erfindungsgemäßen Notabschaltanordnung vorgesehen, dass die Notabschaltanordnung nur dann aktiv ist, wenn sich der Antrieb und insbesondere der dem Antrieb zu Grunde liegende Motor in einem aktiven Zustand befindet. Dabei kann die Aktivierung der Notabschaltanordnung auch von einer Drehzahl und/oder einem Drehmoment des Antriebes abhängig gemacht werden.

Um bestimmte Fahrmanöver des Fahrzeuges zuzulassen, die den Zustand des Fahrzeuges in einen Grenzbereich führen können, bei dem die Notabschaltanordnung greifen würde, ist es bei einer anderen bevorzugten Ausgestaltungsform der vorliegenden Erfindung vorgesehen, dass eine Umgehungseinheit ausgebildet ist, durch deren Betätigung die Notabschaltanordnung in einen inaktiven Zustand schaltbar ist, in welchem die Notabschaltanordnung nicht bewirkt, dass der Antrieb des Fahrzeuges einen inaktiven Zustand einnimmt oder beibehält.

Die Umgehungseinheit kann sich auch auf Teile des Aktivitätsspektrums der Notabschaltanordnung erstrecken. So können bestimmte Sensorkomponenten von der Bewertung, ob ein Abschaltzustand vorliegt oder nicht, selektiv einbezogen oder ausgeschlossen werden. Auf diese Art und Weise kann unterschiedlichen Fertigkeiten des Fahrers Rechnung getragen werden.

Grundsätzlich ist auch denkbar, die der Bewertung durch die Notabschaltanordnung zu Grunde liegenden Parameter, z. B. die jeweiligen Schwellwerte oder Abschaltbereiche der Werte der zu überwachenden Größen, individuell oder auch situativ festzulegen. Es ist z. B. denkbar, dass eine dynamische Anpassung erfolgt, um die wachsende Vertrautheit des Fahrers des Fahrzeuges zu berücksichtigen.

Andererseits ist es von Vorteil, wenn dem Fahrer des Fahrzeuges ständig die Möglichkeit gegeben wird, in den Fahrbetrieb des Fahrzeuges einzugreifen, um eine aus seiner subjektiven Sicht riskante Situation zu entschärfen.

Daher ist bei einer vorteilhaften Weiterbildung der erfindungsgemäßen Notabschaltanordnung eine Not-Aus-Einheit ausgebildet ist, welche bei - insbesondere manueller - Betätigung bewirkt, dass der Antrieb des Fahrzeuges einen inaktiven Zustand einnimmt oder beibehält.

Um die Verwendung eines Fahrzeuges noch sicherer zu gestalten, kann es bei einer anderen vorteilhaften Weiterbildung der erfindungsgemäßen Notabschaltanordnung vorgesehen sein, dass nach dem Eintreten eines Abschaltzustandes und dem Beenden oder Auslaufen einer kritischen Situation der Normalbetrieb des Fahrzeuges und also insbesondere des Antriebes des Fahrzeuges nicht ohne Weiteres wieder aufgenommen wird. Es kann ferner ein bewusstes Eingreifens durch den Fahrzeugführer notwendig gemacht werden.

So ist es von besonderem Vorteil, wenn eine Reaktivierungseinheit ausgebildet ist zu bewirken, dass in oder nach einem Abschaltzustand und/oder im inaktiven Zustand des Antriebes der Antrieb des Fahrzeuges den inaktiven Zustand bis zur Betätigung der Reaktivierungseinheit beibehält.

Ferner betrifft die vorliegende Erfindung ein Fahrzeug, welches mit Motorkraft und insbesondere zusätzlich mit Muskelkraft antreibbar ist, insbesondere ein Elektrofahrrad, ein E-Bike, ein Pedelec oder dergleichen. Das erfindungsgemäße Fahrzeug ist mit einem Antrieb, mindestens einem Rad, welches mit dem Antrieb antreibbar ist und einer erfindungsgemäßen Notabschaltanordnung ausgebildet. Die Notabschaltanordnung ist vorgesehen, um den Antrieb des Fahrzeuges zu steuern.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines erfindungsgemäßen Fahrzeuges nach Art eines Elektrofahrrades, bei welchem eine erste Ausführungsform der Erfindung realisiert ist
- Figur 2: ist schematisches Blockdiagramm, einer bevorzugten Ausführungsform der erfindungsgemäßen Notabschaltanordnung.
- Figur 3: ist ein schematisches Blockdiagramm einer anderen Ausführungsform der erfindungsgemäßen Notabschaltanordnung in Verwendung mit einem Antrieb eines erfindungsgemäßen Fahrzeuges.

### Bevorzugte Ausführungsformen der Erfindung

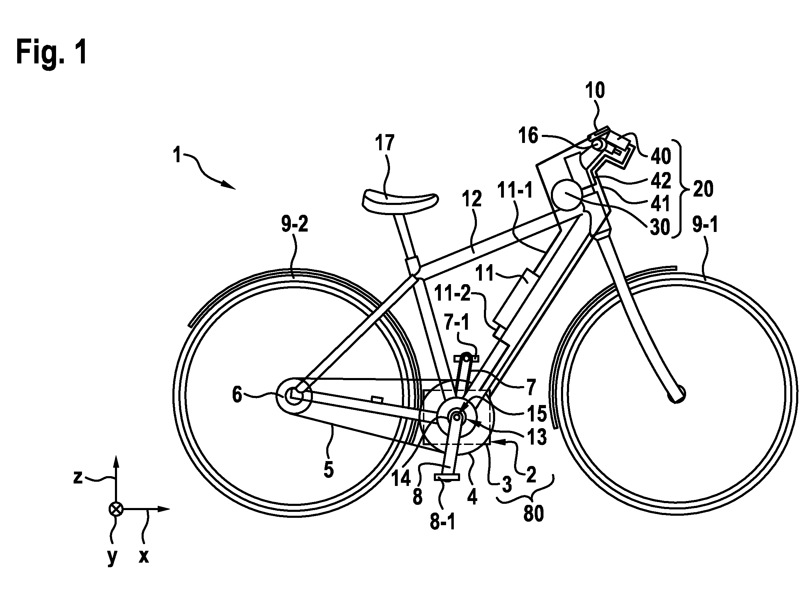

Nachfolgend werden unter Bezugnahme auf die Figuren 1 bis 3 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeuges 1 im Detail beschrieben.

Das Fahrzeug 1 umfasst als Elektrofahrrad einen Rahmen 12, an dem ein Vorderrad 9-1, ein antreibbares Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet, dieses kann Teil einer Gangschaltung sein.

Bei alternativen Ausführungsformen kann der elektrische Antrieb 3 direkt auf das Vorderrad 9-1 oder auf das Hinterrad 9-2 wirken.

Ein Antriebsmoment, welches durch den Fahrer und/oder durch den elektrischen Antrieb 3 bereitgestellt wird, wird von einem Kettenblatt als Abtriebselement 4 am Kurbeltrieb 2 über eine Kette 5 auf das Ritzel 6 übertragen.

Am Lenker 16 des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche der Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Beim erfindungsgemäßen Fahrzeug 1 gemäß Figur 1 wird der erfindungsgemäße Antrieb 80 gebildet von dem elektrischen Antrieb 3 und dem Kurbeltrieb 2, die als solche innerhalb des Kurbelgehäuses 14 zusammenwirken.

In Figur 1 ist das Fahrzeug 1 mit seiner Längserstreckungsrichtung in der x-Richtung ausgerichtet und vertikal und parallel zur xz-Richtung orientiert. Die Querrichtung des Fahrzeuges 1 erstreckt sich parallel zur y-Richtung.

Des Weiteren ist in Figur 1 der Antrieb 80 des erfindungsgemäßen Fahrzeuges 1 zu erkennen, dieser wird gebildet vom Kurbeltrieb 2, dem elektrischen Antrieb 3, z. B. in Form eines Elektromotors, dem Abtriebselement 4 in Form des Kettenblattes und der Batterie 11 zur Speisung des elektrischen Antriebes 3 über Versorgungs- und Steuerleitungen 11-1 und 11-2.

Bei der Ausführungsform der Figur 1 wird die erfindungsgemäße Notabschaltanordnung 20 von der Sensoreinheit 30, der Auswerteeinheit 40, der Steuer-/Messleitung 41 und der Steuer-/Kommunikationsleitung 42 gebildet.

In Figur 1 sind die einzelnen Sensoren 34, 35, 36 und 39 der Sensoreinheit 30 im Detail nicht dargestellt. Diese werden vielmehr schematisch allein durch die Sensoreinheit 30 insgesamt repräsentiert.

Bei der Ausführungsform der Figur 1 ist die Auswerteeinheit 40 als zur Steuereinheit 10 für den Antrieb 80 separate Einheit ausgebildet. Dies ist jedoch nicht zwingend. Vielmehr kann die Auswerteeinheit 40 der Notabschaltanordnung 20 in der Steuereinheit 10 integriert ausgebildet sein.

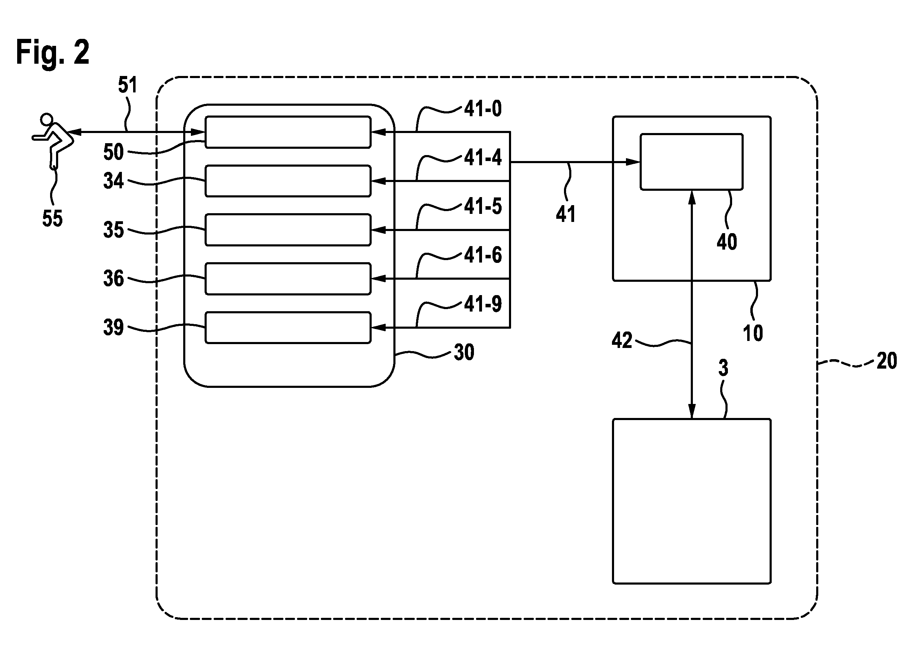

Eine derartige Situation ist im schematischen Blockdiagramm gemäß Figur 2 dargestellt.

Dort befindet sich die Auswerteeinheit 40 in der Steuereinheit 10 des Fahrzeuges 1 in integrierter Form. Über ein Steuer-/Messleitungsbündel 41 ist die Sensoreinheit 30 mit den Sensoren 34, 35, 36 und 39 und einzelnen Steuer- und Messleitungen 41-4, 41-5, 41-6 und 41-9 verbunden.

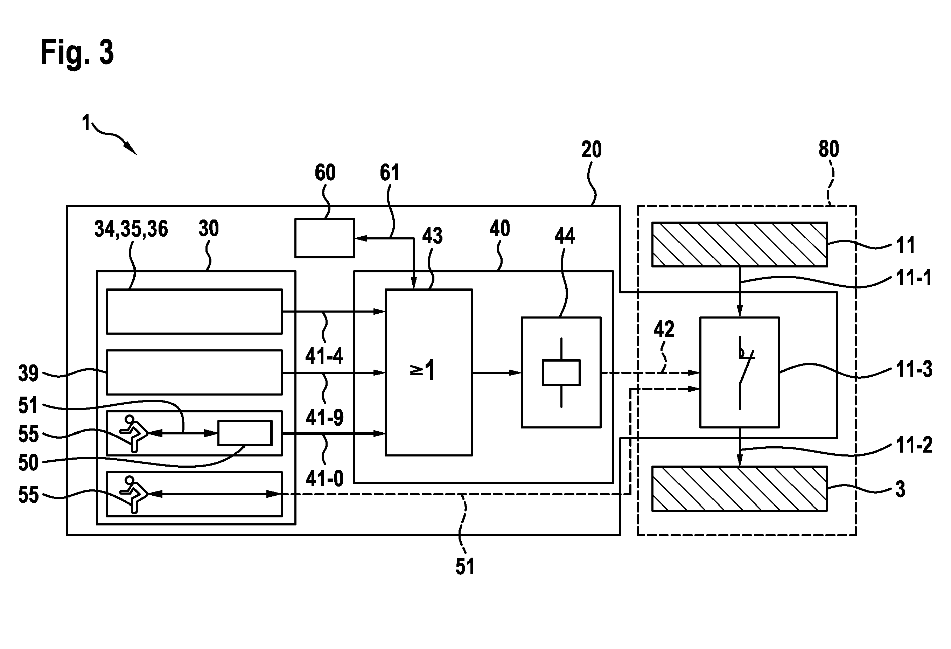

Über eine Steuer- und Kommunikationsleitung 42 ist die Auswerteeinheit 40 mit dem elektrischen Antrieb 3 verbunden. Auf diese Art und Weise ist ein Überführen des Zustandes des elektrischen Antriebes 3 von einem aktiven zu einem inaktiven Zustand möglich. Dies kann auf vielfältige Art und Weise geschehen, wie dies im Zusammenhang mit Figur 3 unten beschrieben wird.

Die einzelnen Sensoren der Sensoreinheit 30 können unter anderem in einer beliebigen Kombination umfassen einen Pedalsensor 34, der auch als Pedalkontaktsensor bezeichnet werden kann, einen Sitzsensor 35, der auch als Sitzkontaktsensor bezeichnet werden kann, einen Griffsensor 36, der auch als Griffkontaktsensor bezeichnet werden kann, und einen Lichtsensor 39. Zusätzlich zum Lichtsensor 39 oder alternativ dazu sind sämtlich funkbasierten Annäherungssensoren verwendbar. Diese Sensoren dienen der Detektion der Anwesenheit am oder Abwesenheit oder Trennung vom Fahrzeug 1 in Bezug auf den Fahrer 55.

Als zusätzliche oder alternative Maßnahme ist bei der Ausführungsform der Notabschaltanordnung 20 gemäß Figur 2 zwischen dem Fahrer 55 und einer Not-Aus-Einheit 50, z.B. einem Not-Aus-Schalter, eine mechanisch Kopplung 51, z.B. nach Art einer Reißleine ausgebildet. Bei räumlicher Trennung des Fahrers 55 vom Fahrzeug, z.B. bei einem Sturz, wird die mechanische Kopplung gespannt und betätigt dadurch die Not-Aus-Einheit 50, die ihrerseits über die Steuer- und Kommunikationsleitung 41-0 ein Signal an die Auswerteeinheit 40 liefert, welche dann über die Steuer- und Kommunikationsleitung 42 den elektrischen Antrieb 3 inaktive schaltet, z.B. durch Unterbrechen der Stromzufuhr.

Figur 3 zeigt in Form eines schematischen Blockdiagramms eine andere Ausführungsform des erfindungsgemäßen Fahrzeuges 1.

Dargestellt ist hier der Antrieb 80 mit dem elektrischen Antrieb 3 und der den Antrieb 3 versorgenden Batterie 11. Die Versorgung erfolgt über die Versorgungsleitungen 11-1 und 11-2, zwischen denen ein steuerbarer Unterbrecher 11-3 ausgebildet ist. Der Unterbrecher 11-3 ist im Normalbetrieb des Fahrzeuges 1 geschlossen und somit leitend. Nur in einem Abschaltzustand, welcher durch die Notabschaltanordnung 20 detektiert wird, wird der Unterbrecher 11-3 durch ein entsprechendes Steuersignal geöffnet und mithin der Energiefluss durch die Versorgungsleitungen 11-1, 11-2 unterbrochen, so dass der Betrieb des elektrischen Antriebes 3 ruht.

Um einen derartigen Steuermechanismus durch die Notabschaltanordnung 20 zu bewerkstelligen, wird zunächst über die Sensoreinheit 30 und über eine Mehrzahl von Sensoren 34, 35, 36 und 39, Pedalsensoren 34, Sitzsensoren 35, Griffsensoren 36 und Lichtsensoren 39 oder andere Anwesenheitssensoren die Anwesenheit oder Abwesenheit/Trennung des Fahrers 55 in Bezug auf das Fahrzeug 1 als eine Abfolge von Werten von Messgrößen bestimmt und in der Auswerteeinheit 40 bewertet. Dazu ist u. a. eine Logikeinheit 43 ausgebildet, über welche die einzelnen Messergebnisse oder daraus abgeleitete Größen, die über Steuer- und Messleitungen 41-4, 41-5, 41-6 und 41-9 zugeführt werden, miteinander logisch verknüpft werden. Im einfachsten Fall weist die Logikeinheit 43 einen mehrkanaligen Oderbaustein auf, so dass, sobald nur eine Messgröße eine Abschaltbedingung erfüllt, die Bewertungseinheit 44 zur Bewertung des Ausganges der Logikeinheit 43 ein Signal an den Unterbrecher 11-3 des Antriebes 80 aussendet, um die Stromzufuhr von der Batterie 11 zum elektrischen Antrieb 3 gemäß des detektierten Abschaltzustandes zu unterbrechen.

Die Ausführungsform gemäß Figur 3 zeigt neben den Sensoren 34, 35, 36 und 39 auch eine vom Fahrer direkt oder über eine mechanische Kopplung 51, z.B. eine Reißleine, betätigbare Not-Aus-Einheit 50, mittels der der Fahrer den Antrieb 80, vermittelt über die Steuer- und Messleitung 41-0, in einen inaktiven Zustand überführen kann.

Zusätzlich oder alternativ kann der Fahrer 55 über die mechanische Kopplung, z.B. in Form einer Reißleine, auch direkt auf den Unterbrecher 11-3 einwirken, um durch Unterbrechung der Stromzufuhr den elektrischen Antrieb 3 des Fahrzeuges 1 inaktiv zu schalten.

Als weiterer Bestandteil der Notabschaltanordnung 20 ist noch eine Reaktivierungseinheit 60 vorgesehen, über welche das Fahrzeug 1 und insbesondere der Antrieb 80 des Fahrzeuges 1 in einen normalen Zustand zurückversetzt werden kann. Eine derartige Reaktivierungseinheit 60 ist optional, kann jedoch von Vorteil sein, da mit ihrer Hilfe verhindert werden kann, dass nach einem Abschaltzustand und dem Wegfall der Abschaltbedingung der Antrieb 80 aus sich heraus den Betrieb ohne Zutun des Fahrzeugführers unverhofft wieder aufnimmt. Erst durch und nach Betätigen der Reaktivierungseinheit 60 und durch Abgabe eines entsprechenden Signales über die Steuer-/Kommunikationsleitung 61 wird der Zustand des Fahrzeuges 1 und seines Antriebes 80 in den Normalbetrieb zurückgesetzt. Damit wird verhindert, dass nach dem Überstehen einer kritischen Situation mit Einnehmen eines Abschaltzustandes und Abschalten des Antriebes 80 das Fahrzeug 1 für den Fahrer unerwartet seinen Betrieb wieder aufnimmt und damit den Fahrer des Fahrzeuges 1 überrascht.

Diese und weitere Merkmale und Eigenschaften der vorliegenden Erfindung werden an Hand der folgenden Darlegungen weiter erläutert:

Fahrräder mit elektrischem Antrieb, insbesondere so genannte E-Bikes oder Pedelecs, werden als Fahrzeuge 1 immer beliebter und finden eine zunehmende Verbreitung.

Der drehmomentstarke elektrische Antrieb 80 kann jedoch in bestimmten Fällen zu kritischen Situationen führen, z.B. wenn der Vortrieb vom Fahrer nicht mehr beherrscht wird oder wenn bei einem Unfall oder einer Fehlfunktion der Antrieb nicht abgeschaltet wird.

Die Verhinderung eines unerwünschten Vortriebs in kritischen Situationen ist in derzeitigen E-Bike-Systemen nicht oder nur unzureichend realisiert.

Zwar ist den Erfindern intern ein mechanischer Not-Ausschaltknopf bekannt, der bei manueller Betätigung über ein Relais den E-Bike-Antrieb abschaltet, jedoch bietet dieses Vorgehen in Gefahrensituationen keinen automatischen Schutz an.

Neben einer Fehlfunktion oder einem Unfall als Ursache, kann eine kritische Situation aber auch durch den Kontrollverlust des Fahrers über das Fahrzeug 1, z.B. einem E-Bike oder Pedelec ausgelöst werden, wenn z.B. der Fahrer 55 den Lenker 16 nicht mehr fest im Griff hat oder vom Fahrzeug 1 stürzt.

Das Erkennen einer solchen Situation und daraus folgend das automatische Auslösen einer Abschaltung eines Antriebes 80 durch die erfindungsgemäße Notabschaltanordnung 20 als einer Not-Aus-Sicherheitsvorrichtung ist bisher nicht verfügbar.

Es ist eine Aufgabe der Erfindung, eine Anordnung und ein Verfahren zum automatischen Erkennen der Abwesenheit oder Trennung des Fahrers vom Fahrzeug 1, z.B. von einem E-Bike oder Pedeled, anzugeben. Die Abwesenheit oder Trennung kann dabei zeitweise oder andauernd sowie teilweise oder vollständig sein.

Wenn z.B. erkannt wird, dass ein Fahrradfahrer das E-Bike oder Pedelec nicht mehr sicher im Griff hat (z.B. indem ein losgelassener Lenker ermittelt wird) oder sich der Fahrer nicht mehr auf dem Fahrzeug 1 befindet (Sturz), so wird erfindungsgemäß die Notabschaltanordnung 20 automatisch ausgelöst und sorgt für ein Inaktivwerden des Vortriebes also z.B. für eine automatische Deaktivierung eines Antriebes 80 eines E-Bikes in kritischen Situationen.

Die im Rahmen dieser Erfindung vorgeschlagene Notabschaltanordnung ist als Not-Aus- Sicherheitsvorrichtung -z.B. für ein E-Bike oder Pedelec - ausgebildet, eine Fahrerabwesenheit oder Fahrertrennung vom Fahrzeug 1 zu erkennen.

Es werden u.a. folgende Auslösemechanismen zum Erkennen der Fahrerabwesenheit oder Fahrertrennung z.B. auf Grund eines Sturzes oder eines unkontrollierten Absteigens des Fahrers vorgeschlagen:
(1) Mechanische Verbindung oder ein mechanischer Kontakt zwischen dem Fahrer und dem Fahrzeug, z.B. einem E-Bike oder Pedelec, z.B. mittels einer Reißleine oder dergleichen: Eine Fahrerabwesenheit wird erkannt durch den Verlust des mechanischen Kontaktes z.B. durch Abriss einer Reißleine, die den Fahrer mit dem E-Bike verbindet. Die Reißleine kann auf zwei Arten realisiert werden:
   (1.1) Die Reißleine ist mit dem Not-Aus-Knopf 50 verbunden. Bei Überlast wird das am Not-Aus-Knopf 50 befindliche Ende der Reißleine aus ihrer Befestigung gezogen und betätigt dadurch den Not-Aus-Knopf 50.
   (1.2) Die Reißleine hat einen Stecker als Solltrennstelle, die bei Überlast getrennt wird und dadurch einen Stromkreis öffnet und damit eine Aktion der Notabschaltanordnung 20 als Not-Aus-Sicherheitsvorrichtung und das Deaktivieren des Antriebs 80 auslöst.
   Die Reißleine ist so auszugestalten, dass sie den Fahrer in seiner Bewegungsfreiheit nicht einschränkt. Zur erneuten Aktivierung des Antriebes 80 muss ein Schalter 60 z.B. manuell wieder zurückgesetzt und die Reißleine wieder angebracht werden.
(2) Loslassen des Lenkers: Solange der Fahrer die Hände am Lenker hat, ist der Antrieb aktiv. Beim Loslassen der Lenkerhandgriffe wird die Notabschaltanordnung 20 als Not-Aus-Sicherheitsvorrichtung aktiv. Das Erkennen, ob der Fahrer mit seinen Händen den Lenker greift, kann auf verschiedene Arten realisiert werden:
   (2.1) Die Lenkerhandgriffe können druckempfindliche Mikroschalter aufweisen.
   (2.2) In die Lenkerhandgriffe können druckempfindliche Piezodruckelemente eingebaut sein.
      Solange ein bestimmter Druck der Hand beim Umfassen des Lenkerhandgriffs aufgebracht ist oder wird, sind die Schalter aktiviert und es wird ein Stromkreis geschlossen und Antrieb 80 ist aktiv. Werden die Handgriffe losgelassen, wird die Not-Aus-Sicherheitsvorrichtung aktiviert.
   (2.3) Die Lenkerhandgriffe können leitfähige Griffelemente aufweisen. Solange die Hände die Lenkerhandgriffe umfassen, wird die Berührung erkannt und es wird ein Stromkreis geschlossen und der E-Bike Antrieb ist aktiv. Wird ein Handgriff losgelassen, wir die Not-Aus Sicherheitsvorrichtung aktiviert.
(3) Kontaktlose Verbindung zwischen einem vom Fahrer zu tragenden Funksender oder dergleichen und einer Steuerung 10, 40 oder Elektronik des Fahrzeuges 1. Im Fall eines Sturzes oder ungewollten und/oder unkontrollierten Absteigens des Fahrers wird der Not-Aus-Schalter durch den Verlust der nur für kurze Entfernungen wirksamen drahtlosen Verbindung aktiviert, wenn z.B. der Abstand zwischen Funksender am Fahrer und Funkempfänger am Fahrrad zu groß wird. Für die drahtlose Verbindung bieten sich verschiedene Lösungsmöglichkeiten an:
   - RFID Chip in einem vom Fahrer getragenen Armband, Halskette, einer Smart-Watch oder dergleichen und einem zugehörigem RFID-Empfänger z.B. in einem Bedienfeld oder Steuergerät 10, 40 des Fahrzeuges 1.
   - Bluetoothverbindung zwischen einer vom Fahrer getragenen Smartphone oder dergleichen und einem zugehörigem Bluetoothempfänger im Steuergerät 10, 40 des Fahrzeuges 1.
   - Nutzung anderer Funkverbindungsverfahren mit geringer Reichweite wie z.B. NFC (Near Field Communication).

Zur erneuten Aktivierung des Antriebes 80 kann obligatorisch ein Schalter 60 manuell betätigbar sein und der Fahrer muss sich mit seinem am Körper getragenen Funksender wieder im Bereich Funkempfängers am Fahrzeug 1 befinden.

## Patentansprüche

1. Notabschaltanordnung (20) für einen Antrieb (80) eines mit Motorkraft und insbesondere zusätzlich mit Muskelkraft antreibbaren Fahrzeuges (1), Elektrofahrrades, E-Bikes, Pedelecs oder dergleichen,
- welche eine Sensoreinheit (30) und eine Auswerteeinheit (40) aufweist,
- wobei die Sensoreinheit (30) ausgebildet ist,
(i) mindestens eine Größe zu überwachen, die für einen Zustand eines zumindest teilweisen und/oder drohenden Kontrollverlustes eines Fahrers (55) über das Fahrzeug (1) charakteristisch ist, und
(ii) mindestens einen Wert der mindestens einen Größe bereitzustellen, und
- wobei die Auswerteeinheit (40) ausgebildet ist,
(iii) aus dem mindestens Wert der mindestens einen Größe zu bestimmen, ob ein Abschaltzustand vorliegt, und
(iv) beim Vorliegen eines Abschaltzustandes zu bewirken oder zu veranlassen, dass der Antrieb (80) des Fahrzeuges (1) einen inaktiven Zustand einnimmt oder beibehält.

2. Notabschaltanordnung (20) nach Anspruch 1,
welche ausgebildet ist,
(i) eine zeitweise oder andauernde und/oder teilweise oder vollständige An- und Abwesenheit des Fahrers (55) am Fahrzeug (1) zu überwachen und
(ii) das Bestimmen des Vorliegens eines Abschaltzustandes insbesondere auf der Grundlage des Überwachens durchzuführen.

3. Notabschaltanordnung (20) nach einem der vorangehenden Ansprüche, bei welcher der inaktive Zustand des Fahrzeuges (1) ein Zustand ist, bei welchem eine Kopplung des Antriebs (80) mit Drehmomentübertragung an ein Antriebsrad (9-2) des Fahrzeuges (1) unterdrückt oder vermindert ist.

4. Notabschaltanordnung (20) nach Anspruch 3,
welche einen oder mehrere Sensoren (34, 35, 36, 39) ausweist, die ausgebildet sind, eine oder mehrere Größen, aus der Gruppe zu bestimmen, die aufweist:
- einen Kontakt des Fahrers (55) des Fahrzeuges (1) zu einem oder beiden von zwei Lenkergriffen des Fahrzeuges (1),
- einen Kontakt des Fahrers (55) des Fahrzeuges (1) zu einer oder beiden von zwei Pedalen (7-1, 8-1) des Fahrzeuges (1),
- einen Kontakt des Fahrers (55) des Fahrzeuges (1) zu einem Sitz (17) des Fahrzeuges (1) und
- einen Abstand des Fahrers (55) des Fahrzeuges (1) zu einer oder zu mehreren Komponenten und insbesondere zum Lenker (16) des Fahrzeuges (1), und/oder
deren zeitliche Änderung.

5. Notabschaltanordnung (20) nach Anspruch 3 oder 4,
bei welcher ein jeweiliger Sensor (34, 35, 36, 39) ausgewählt ist aus der Gruppe, die aufweist elektrische Sensoren, magnetische Sensoren, Drucksensoren, optische Sensoren, Infrarotsensoren, Funksensoren und dergleichen.

6. Notabschaltanordnung (20) nach einem der vorangehenden Ansprüche, bei welcher die Auswerteeinheit (40) ausgebildet ist, das Vorliegen eines Abschaltzustandes festzustellen, wenn das Signal der Sensoreinrichtung (30) anzeigt, dass ein Wert oder Werte einer oder mehrerer charakteristischer Größen in einem vorgegebenen Abschaltbereich liegen, insbesondere einen vorgegebenen Grenzwert über- oder unterschreiten.

7. Notabschaltanordnung (20) nach einem der vorangehenden Ansprüche, bei welcher die Auswerteeinheit (40) ausgebildet ist, das Vorliegen eines Abschaltzustandes erst dann festzustellen, wenn das Signal der Sensoreinrichtung (30) zu mehreren aufeinanderfolgenden Zeitpunkten anzeigt, dass ein Wert oder Werte einer oder mehrerer charakteristischer Größen in einem vorgegebenen Abschaltbereich liegen und insbesondere einen vorgegebenen Grenzwert über- oder unterschreiten.

8. Notabschaltanordnung (20) nach einem der vorangehenden Ansprüche, welche ausgebildet ist, bei aktivem Antrieb (80) und insbesondere aktivem Motor (3) des Antriebes (80) aktiv zu sein, vorzugsweise in Abhängigkeit von einer Drehzahl und/oder von einem Drehmoment des Antriebes (80).

9. Notabschaltanordnung (20) nach einem der vorangehenden Ansprüche, welche einen Umgehungseinheit (45) aufweist, durch deren Betätigung die Notabschaltanordnung (20) in einen inaktiven Zustand schaltbar ist, in welchem die Notabschaltanordnung (20) nicht bewirkt, dass der Antrieb (80) des Fahrzeuges (1) einen inaktiven Zustand einnimmt oder beibehält.

10. Notabschaltanordnung (20) nach einem der vorangehenden Ansprüche, mit einer Not-Aus-Einheit (50), die ausgebildet ist, bei Betätigung zu bewirken, dass der Antrieb (80) des Fahrzeuges (1) einen inaktiven Zustand einnimmt oder beibehält.

11. Notabschaltanordnung (20) nach einem der vorangehenden Ansprüche, mit einer Reaktivierungseinheit (60), die ausgebildet ist zu bewirken, dass in oder nach einem Abschaltzustand und/oder im inaktiven Zustand des Antriebes (80) der Antrieb (80) des Fahrzeuges (1) den inaktiven Zustand bis zur Betätigung der Reaktivierungseinheit (60) beibehält.

12. Fahrzeug (1), welches mit Motorkraft und insbesondere zusätzlich mit Muskelkraft antreibbar ist, insbesondere Elektrofahrrad, E-Bike, Pedelec oder dergleichen,
mit:
- einem Antrieb (80),
- mindestens einem Rad (9-1, 9-2), welches mit dem Antrieb (80) antreibbar ist, und
- einer Notabschaltanordnung (20) nach einem der Ansprüche 1 bis 11, durch welche der Antrieb (80) steuerbar ist.
